Europäisches Patentamt

European Patent Office

Office européen des brevets

(19)

(11) Veröffentlichungsnummer: **0 058 817**
**B1**

(12) **EUROPÄISCHE PATENTSCHRIFT**

(45) Veröffentlichungstag der Patentschrift:
09.04.86

(51) Int. Cl.⁴: **H 05 B 7/06, H 05 B 3/03**

(21) Anmeldenummer: 82100116.1

(22) Anmeldetag: 09.01.82

(54) Kontaktelektrodenanordnung für Lichtbogen- oder Widerstandsschmelzöfen.

(30) Priorität: 24.02.81 DE 3106741

(43) Veröffentlichungstag der Anmeldung:
01.09.82 Patentblatt 82/35

(45) Bekanntmachung des Hinweises auf die Patenterteilung:
09.04.86 Patentblatt 86/15

(84) Benannte Vertragsstaaten:
AT BE CH DE FR GB IT LI LU SE

(56) Entgegenhaltungen:
CH - A - 92 604
DE - C - 282 162
DE - C - 290 945
FR - A - 608 835
FR - A - 1 538 996
GB - A - 14 858
GB - A - 2 055 028

(73) Patentinhaber: **M.A.N. MASCHINENFABRIK AUGSBURG-NÜRNBERG Aktiengesellschaft,**
Bahnhofstrasse 66, D-4200 Oberhausen 11 (DE)

(72) Erfinder: **Guido, Heinz,** Albert-Schweitzer Strasse 28,
D-4100 Duisburg 25 (DE)
Erfinder: **Wolfgarten, Hubert,** Lehmbergstrasse 2a,
D-4200 Oberhausen 11 (DE)

## Beschreibung

Die Erfindung betrifft eine Kontaktelektroden-Anordnung für Lichtbogen- oder Widerstandsschmelzöfen, mit einer außerhalb der Ofenmauerung angeordneten Basisplatte, mit der die Hälse wenigstens zweier Elektroden leitend verbunden sind, wobei der übrige Teil der Elektroden in die Ofenausmauerung hineinragt und mit der in dem Ofenherd befindlichen Schmelze Kontakt hat.

Aus der deutschen Patentschrift 219 575 ist bereits eine Elektroden-Anordnung bekannt, bei der die Elektroden ein Stabbündel aus Eisen darstellen, das mit einer Platte, die die Stäbe an ihrem unteren Ende verbindet, einen einheitlichen Körper bildet, der den elektrischen Strom zuführt.

Bei dieser Anordnung wird demnach nicht von dem bekannten Prinzip (vgl. DE-OS 2.525.720) Gebrauch gemacht, in den unteren Teil des Ofens eine elektrisch leitfähige Ausmauerungsschicht einzubringen, über die die Eltrodenanordnung beschickt wird. Diese bekannte Lösung hat insbesondere den Nachteil, daß durch den Einbau der Elektrodenstäbe sich die Ausmauerung aufheizt und dadurch stärker beansprucht und verschlissen wird. Nachteilig sind weiterhin unkontrollierbare Kontaktverhältnisse zwischen den Metallstiften und der elektrisch leitenden Ausmauerungsschicht, die eine schlecht kontrollierbare Stromverteilung hervorrufen.

Die Erfindung greift daher auf das Prinzip der schon 1910 veröffentlichten Patentschrift 219 575 zurück, bei der eine metallische Basisplatte vorhanden ist, mit der eine Anordnung von Elektroden verbunden ist.

Aus der DE-A-3 022 566 ist eine Kontaktelektroden-Anordnung bekannt, bei der ein Bodenkontakt der Schmelze aus Ziegeln besteht, in die metallische Leiter eingebettet sind. Die Leiter dringen bis in das Außenfutter der Ausmauerung ein, die beispielsweise aus elektrisch leitenden Kohlenstoff-Ziegeln besteht. Das Außenfutter schließt nach außen mit einer metallischen Platte (Basisplatte) ab. Diese Platte hat eine erhebliche Ausdehnung am Ofenboden und wird an den positiven Pol der Gleichstromquelle angeschlossen. Die dem Bodenkontakt dienende Basisplatte gemäß dem Stand der Technik ist mit Luftkülung und/oder Flüssigkeitskühlung versehen, damit sie auf möglichst niedriger Temperatur gehalten werden kann. Sie ist jedoch mit den Elektroden nur indirekt über das leitende Außenfutter verbunden.

Es stellt sich damit die Aufgabe, die Prinzipien der beiden zum Stand der Technik gehörenden Anordnungendadurch nutzfähig zu machen, indem eine ausreichende Kühlung auch der Elektrodenhälse und zusätzlich weiterer Teile des Ofens ohne Einbuße an Wirksamkeit, Stabilität und Kostengünstigkeit eintritt:

Diese Aufgaben werden gelöst bei einer Kontaktelektroden-Anordnung gemäß Erfindung, die mit Elektroden und Basisplatten arbeitet, wobei die Basisplatte unterhalb des Ofenbodens oder seitlich an der Ausmauerung im Abstand von deren Außenseite angebracht ist und bei der zwischen Basisplatte und Außenseite ein Zwischenraum geschaffen ist, in den ein die Elektrodenhälse, die Ofen-Außenseite und die Basisplatte kühlendes Fluid fließt bzw. fließen kann,

Zwischen Basisplatte und Außenseite ist demnach eine Art Kammer geschaffen, durch die ein Fluid geführt wird, durch das die Elektrodenhälse, aber auch gleichzeitig die Basisplatte und - was noch wichtiger ist - die Ofenaußenseite gekühlt werden können. Als Fluid eignet sich in erster Linie Luft; es ist jedoch auch möglich, bei extremen Beanspruchungen flüssiges Natrium als Kühlflüssigkeit einzusetzen.

Das Prinzip bietet weteriün den Vorteil, daß die Stromzuführung nicht von der Seite her erfolgen muß, sondern im Bereiche der Achse des Ofengefäßes erfolgen kann; die Achse ist dabei definiert durch die Achse der beweglichen oberen Elektrode. Die axiale Zuführung hat den Vorteil, daß der Lichtbogen kaum noch durch die Stromzuführung abgelenkt wird.

Um einen teilweise geschlossenen Raum zwischen Basisplatte und Ofenaußenseite zu erhalten und um das kühlende Fluid in einer geschlossenen Leitung zu- und abzuführen, wird vorgeschlagen, daß die Basisplatte randseitig von einem, den Zwischenraum zwischen Ofen-Außenseite und Basisplatte abdeckenden Manteö wenigstens teilweise umgeben ist.

Die Basisplatte kann zusätzlich bzw. in besonderer Ausführungsform auch mit Lufteinlässen versehen sein, beispielsweise Bohrungen oder größeren, zentral eingebrachten Einschnitten.

Weiterhin wird vorgeschlagen, daß in den Zwischenraum zwischen Basisplatte und Außenseite auch Luftleitbleche eingebaut werden, die beispielsweise einen Luftstrom von innen nach außen führen. Derartige Luftleitbleche können auch mit Kurvenform versehen sein, beispielsweise Abschnitten einer archimedischen Spirale, die der Funktion

$$\zeta = a\,\varphi$$

gehorcht.

Eine zentrale Stromzuführung ist technisch vorteilhaft dadurch zu lösen, daß ein an eine zentrale Lufteintrittsöffnung angeschlossener Zuleitungsstutzen gleichzeitig als stromführender Anschluß dient.

Die Elektrodenhälse können in der Basisplatte eingelassen oder eingesteckt sein un mit ihr verschweißt sein. Um die Teile gegeneinander leichter auswechselbar zu machen, wird vorgeschlagen, die Elektrodenhälse mit der Basisplatte zu verklemmen oder zu verschrauben.

Wesentlich bei allen Konstruktionen ist, daß eine einwandfreie Kühlung mit Hilfe des geschaffenen Zwischenraumes möglich ist, der sowohl die Elektroden als auch die Ofenaußenseite kühlt, so daß die Betriebsbedingungen besser beherrschbar sind.

Ein Ausführungsbeispiel der Erfindung ist in der beigefügten Zeichnung dargestellt. Die Figuren der Zeichnung zeigen:

Figur 1 einen Schnitt durch das schwenkbare Ofengefäß eines Lichtbogen-Schmelzofens mit einer Kontaktelektroden-Anordnung gemäß Erfindung;

Figur 2 einen Schnitt durch den Ofen gemäß Figur 1 entlang der Linie II... II der Figur 1, jedoch in detaillierter Darstellung.

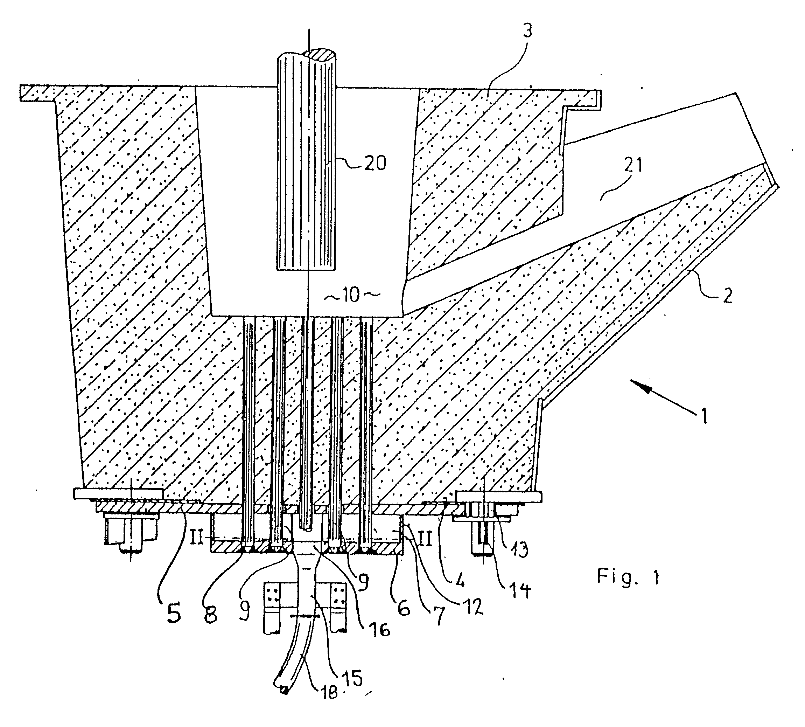

Das in der Figur 1 im Schnitt dargestellte Ofengefäß 1 besitzt einen Mantel 2, der mit einer feuerfesten Ausfütterung 3 versehen ist. Unterhalb des Ofenherdes, d. h. im Bereich des Ofenbodens 4, ist eine metallische Tragplatte 5 vorgesehen, auf der sich die Ausfütterung 3 aufbaut.

Unterhalb der Tragplatte 5 ist eine Basisplatte 6 im Abstand angebracht, wobei zwischen Basisplatte 6 und Ofenboden 4 ein Zwischenraum 7 geschaffen ist. Die Basisplatte 6 ist mit den Hälsen 8 mehrerer Elektroden 9 verschweißt, wobei die Hälse 8 in die Platte 6 hineinragen.

Die Elektroden 9 ragen mit ihrem übrigen Teil in die Ofenausmauerung hinein und enden im Bereich des Ofenherdes 10. Die Elektroden bestehen aus Metall, vorzugsweise aus einem dem Schmelzgut ähnlichen oder verwandten Werkstoff, beispielsweise Eisen. Damit können sie sich an ihrer Spitze aus dem Schmelzgut erneuern und verschleißen praktisch nicht.

Die Anzahl und der Durchmesser der Elektroden 9 wird so gewählt, daß eine ausreichende Wärmeableitung bei ausreichender mechanischer Festigkeit gegeben ist; gleichzeitig wird ein ausreichender Teil des Herdbodens mit elektrischem Strom beaufschlagt.

Es ist möglich, die Elektroden mit der Basisplatte zu verschweißen, wie dargestellt. In Abwandlung dieser Ausführungsform ist auch möglich, die Elektroden mit Hilfe einer Klemm- oder Schraubvorrichtung mit der Basisplatte zu verbinden.

Die Basisplatte 6 wird mit Hilfe von Bolzen 12 mit der Tragplatte 5 verbunden. Die Tragplatte 5 wird mit Hilfe von starken Bolzen 13 und Keilen 14 lösbar mit der Unterseite des Ofengefäßes verbunden. Wesentlich ist, daß der Zwischenraum 7 zwischen Basisplatte und Bodenunterseite mit Hilfe eines Luftstromes kühlbar ist. Der Luftstrom tritt durch einen Metall-Zuleitungsstutzen 15 an den sich nach unten eine flexible Leitung 18 anschließt, durch eine Mittenöffnung 16 in den zu kühlenden Raum ein. Mit Hilfe von Luftleitblechen 17 wird der Luftstrom dann so geführt, daß er mit grober Intensität und gleichmäßiger Verteilung an den Elektrodenhälsen 8 vorbeistreicht und dabei diese sowie die Bodenunterseite kühlt. Der Zuleitungsstutzen 15 dient gleichzeitig als stromführender Anschluß.

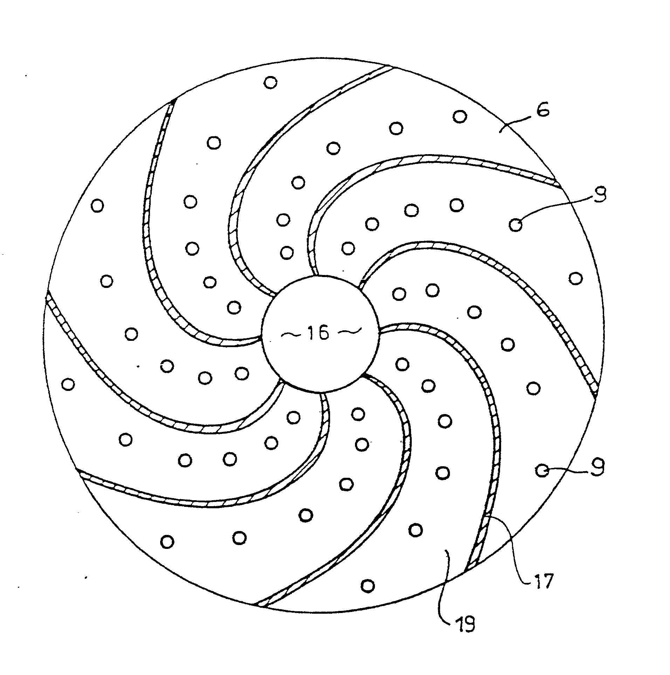

Die Anordnung der Luftleitbleche 17 ist insbesondere aus der Figur 2 zu erkennen. Die Mittenöffnung 16 ist sternförmig von insgesamt acht Luftleitblechen 17 umgeben, die den intensiven, aus der Mittenöffnung 16 herauskommenden Luftstrom führen. Dazu sind die Luftleitbleche in Form von archimedischen Spiralen gebogen, d. h. sie gehorchen der Funktion $\zeta = a.\varphi$. Die Luftleitblechformen können nach fachmännischem Ermessen auch variiert werden. Darüber hinaus ist möglich, die Luftströmung auch in anderen Richtungen einzustellen, wenn dies erforderlich sein sollte.

Im Gegensatz zu der Darstellung der Figur 1 befindet sich bei der Anordnung gemäß Figur 2 auf der Unterseite, d. h. auf der Basisplatte 6, eine sehr dichte Anordnung von insgesamt 40 Elektroden 9, die praktisch die Form von Stiften haben. Beispielsweise trägt jeder zwischen den Luftleitblechen gebildeter Kanal 19 fünf Elektroden 9. Diese Elektroden werden möglichst dünn gehalten, weil das Verhältnis von Querschnitt zu Oberfläche, die von kühlendem Fluid bestrichen wird, dann günstig ist. Eine Grenze nach unten ist gegeben durch die mechanische Fertigkeit und die temporär auftretende Wärmebeanspruchung. Auf einer Basisplatte können aber daher beispielsweise zwei bis vierzig Elektroden angeordnet sien. In der Figur 1 ist die Anzahl der Elektroden beschränkt, um die Darstellung nicht unübersichtlich zu machen.

In der Figur 1 ist ferner erkennbar, daß sich oberhalb der Elektrodenanordnung eine bewegliche Schmelzelektrode 20 befindet, die weit in die Ofenwanne hineinragt, wie dies an sich bekannt ist. Ein Schüttkanal 21 ist vorgesehen, der mit Hilfe einer (nicht dargestellten) Schwenkvorrichtung, die am Schwenkbügel angreift, in Schüttpostion gebracht werden kann.

Die Luftleitbleche 17 können auch weggelassen werden, beispielsweise wenn in den Zwischenraum 7 eine Kühlflüssigkeit, z. B. flüssiges Natrium eingespeist wird. In diesem Fall wird, ähnlich wie bei einer flachen Trommel, die Basisplatte 6 randseitig von einem den Zwischenraum zwischen Außenseite und Basisplatte abdeckenden Mantel umgeben.

**Patentansprüche:**

1. Kontaktelektroden-Anordnung für Lichtbogen- oder Widerstandsschmelzöfen, mit einer außerhalb der Ofenmauerung angeordneten Basisplatte (6), die unterhalb des Ofenbodens (4) oder seitlich an der Außenmauerung in Abstand von deren Außenseite angebracht ist und mit der Elektroden leitend verbunden sind, wobei die Elektroden in die Ofenausmauerung hineinragen und mit der in dem Ofenherd (10) befindlichen Schmelze Kontakt haben, dadurch gekennzeichnet, daß die Elektrodenhälse (8) mit der Basisplatte direkt verbunden sind und daß zwischen der Basisplatte (6) und Außenseite ein Zwischenraum (7) geschaffen ist, in dem ein die Elektrodenhälse (8), die Ofenaußenseite und die Basisplatte (6) kühlendes Fluid fließt, bzw. fließen kann:

2. Elektroden-Anordnung nach Anspruch 1, dadurch gekennzeichnet, daß die Basisplatte (6) randseitig von einem, den Zwischenraum zwischen Außenseite und Basisplatte abdeckenden Mantel wenigstens teilweise umgeben ist.

3. Elektroden-Anordnung nach Anspruch 1 oder 2, dadurch gekennzeichnet, daß die Basisplatte (6) mit Lufteinlässen (16) versehen ist.

4. Elektroden-Anordnung nach Anspruch 1 bis 3, dadurch gekennzeichnet, daß die Basisplatte mit im Zwischenraum (7) angeordneten Luftleitblechen (17) versehen ist.

5. Elektroden-Anordnung nach Anspruch 1 bis 4, dadürch gekennzeichnet, daß die Basisplatte (6) eine zentrale Lufteintrittsöffnung (16) besitzt und sternförmig von gekurvten Luftleitblechen (17) umgeben ist.

6. Elektroden-Anordnung nach Anspruch 5, dadurch gekennzeichnet, daß ein unterhalb der Lufteintrittsöffnung (16) sich anschließender Zuleitungsstutzen (15) gleichzeitig als strömführender Anschluß dient.

7. Elektroden-Anordnung nach Anspruch 1, dadurch gekennzeichnet, daß die Eleketrodenhälse (8) in die Basisplatte (6) eingelassen oder auf sie aufgesetzt und verschweißt sind.

8. Elektroden-Anordnung nach Anspruch 1, dadurch gekennzeichnet, daß die Elektrodenhälse (8) mit der Basisplatte (6) verklemmt oder verschraubt sind.

**Claims:**

1. A contact electrode arrangement for arc or resistance furnaces, with a base plate (6) arranged outside the furnace masonry and disposed below the furnace base or laterally of the outer masonry at a spacing from the outer side thereof and electrically connected to the electrodes, the electrodes extending into the furnace masonry so as to contact the melt present in the furnace hearth (10), characterised in that the electrode necks (8) are directly connected with the base plate, and that between the base plate (6) and the said outer side there is an intermediate space (7) in which a fluid cooling the electrode necks (8), the furnace outer side and the base plate (6) flows or can flow.

2. An electrode arrangement according to claim I, characterised in that the base plate (6) is at least partially surrounded at its margin by a casing which covers the space between the said outer side and the base plate.

3. An electrode arrangement according to claim 1 or 2, characterised in that the base plate (6) is provided with an air inlet (16).

4. An electrode arrangement according to claims 1 to 3, characterised in that the base plate is provided with air guiding plates (17) arranged in the space (7).

5. An elctrode arrangement according to claims 1 to 4, characterised in that the base plate (6) has a central air inlet opening (16) which is radially surrounded by curved air guiding plates (17).

6. An electrode arrangement according to claim 5, characterised in that a supply spigot (15) directly below the air inlet opening (16) serves simultaneously as a flow guiding connection.

7. An electrode arrangement according to claim 1, characterised in that the electrode necks (8) are inset in the base plate (8) or are positioned thereon and welded.

8. An electrode arrangement according to claim 1, characterised in that the electrode necks (8) are clamped or screwed onto the base plate.

**Revendications**

1.- Dispositif d'électrodes de contact pour des fours de fusion à arcs ou bien à résistances, avec une plaque de base (6) disposée à l'extérieur de la maçonnerie du four et qui est rapportée au-dessous du fond (4) du four ou bien latéralement contre la maçonnerie externe à une certaine distance de la face externe de celle-ci, et qui est reliée de façon conductrice avec les électrodes, les électrodes pénétrant dans la maçonnerie du four et étant en contact avec la masse fondue se trouvant dans le foyer (10) du four, dispositif caractérisé en ce que les têtes d'électrodes (8) sont directement reliées à la plaque de base et qu'entre cette plaque de base (6) et la face externe est ménagé un espace intermédiaire (7), dans lequel circule. ou peut circuler, un fluide refroidissant les têtes d'électrodes (8), la face externe du four et la plaque de base (6).

2.- Dispositif d'électrodes selon la revendication 1, caractérisé en ce que la plaque de base (6) est entourée, au moins partiellement,sur son bord, d'une enveloppe recouvrant cet espace intermédiaire entre la face externe de la plaque de base.

3.- Dispositif d'électrodes selon la revendication 1 ou 2, caractérisé en ce que la plaque de base (6) est munie d'admissions d'air (16).

4.- Dispositif d'électrodes selon l'une des revendications 1 à 3, caractérisé en ce que la plaque de base est munie de tôles d'orientation de l'air (17) disposées dans l'espace intermédiaire (7).

5.- Dispositif d'électrodes selon l'une des revendications 1 à 4, caractérisé en ce que la plaque de base (6) comporte un orifice central d'entrée d'air (16) et est entourée en forme d'étoile de tôles d'orientation d'air courbées (17).

6.- Dispositif d'électrodes selon la revendication 5, caractérisé en ce qu'une tubulure d'alimentation (15) se raccordant au-dessous de l'orifice d'entrée d'air (16) sert en même temps de raccordement canalisant l'écoulement.

7.- Dispositif d'électrodes selon la revendication 1, caractérisé en ce que les têtes d'électrodes (8) sont encastrées dans la plaque de base (6) ou bien sont posées et soudées sur elle.

8.- Dispositif d'électrodes selon la revendication 1, caractérisé en ce que les têtes d'électrodes (8) sont coincées ou vissées avec la plaque de base (6).

Fig. 1